(19) Europäisches Patentamt
European Patent Office
Office européen des brevets

(11) **EP 3 394 108 B1**

(12) **EUROPEAN PATENT SPECIFICATION**

(45) Date of publication and mention
of the grant of the patent:
**05.02.2020 Bulletin 2020/06**

(51) Int Cl.:
**C08B 3/08** (2006.01)    **C08B 3/10** (2006.01)

(21) Application number: **16826304.4**

(22) Date of filing: **19.12.2016**

(86) International application number:
**PCT/EP2016/081780**

(87) International publication number:
**WO 2017/108709 (29.06.2017 Gazette 2017/26)**

(54) **ACYLATION OF BIOPOLYMER COMPRISING ANHYDROGLUCOSE UNITS**

ACYLIERUNG VON BIOPOLYMEREN MIT ANHYDROGLUCOSEEINHEITEN

ACYLATION DE BIOPOLYMÈRE COMPRENANT DES MOTIFS ANHYDROGLUCOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.12.2015 EP 15202027**

(43) Date of publication of application:
**31.10.2018 Bulletin 2018/44**

(73) Proprietor: **SAPPI Netherlands Services B.V.
6211 AA Maastricht (NL)**

(72) Inventors:
• **ENGLISH, Robert
Isle of Harris
Eilean Siar HS5 3UE (GB)**
• **GRAVESON, Ian
Nuneaton
Warwickshire CV10 9EX (GB)**

• **MOMIN, Saschi
Edmonton
London N9 9JF (GB)**
• **FERLIN, Nadège
59800 Lille (FR)**

(74) Representative: **Schmitz, Joseph
Isler & Pedrazzini AG
Giesshübelstrasse 45
Postfach 1772
8027 Zürich (CH)**

(56) References cited:
**WO-A1-2012/127110    WO-A1-2014/009517
WO-A1-2014/070092**

• **STAVROS GREMOS ET AL: "Direct enzymatic
acylation of cellulose pretreated in BMIMCl ionic
liquid", BIORESOURCE TECHNOLOGY,
ELSEVIER BV, GB, vol. 102, no. 2, 6 September
2010 (2010-09-06), pages 1378-1382,
XP028371562, ISSN: 0960-8524, DOI:
10.1016/J.BIORTECH.2010.09.021 [retrieved on
2010-09-15]**

**Description**

TECHNICAL FIELD

The present invention relates the preparation of a particulate, acylated biopolymer comprising anhydroglucose units and discloses polymeric materials incorporating said particulate biopolymer.

PRIOR ART

The high crystallinity of native nanocellulose is the reason native nanocellulose has excellent mechanical properties such as high tensile properties. For this reason, native nanocellulose has previously been proposed as a reinforcing agent in polymers to form enhanced composite materials. However, a significant portion of polymers used today, such as for example polyolefins, are highly hydrophobic, whereas native nanocellulose is inherently hydrophilic due to the presence of three hydroxyl groups per anhydroglucose unit. The resulting incompatibility between such polymers and nanocellulose has led to the development of surface modified nanocellulose in which chemical moieties have been linked to available hydroxyl groups. Common chemical moieties are carboxylates, trialkyloxy silanes and such.
WO 2014/070092 A1 discloses the preparation of surface-modified cellulose nanocrystals, in which the freshly hydrolyzed cellulose is surface modified using an aqueous solution of substituted organic acid in order to introduce the corresponding substituted carbonyl moieties through acid-catalyzed esterification.
WO2012/127110 A1 discloses a process for preparing nanocrystalline cellulose, and further a process in which the thus prepared nanocrystalline cellulose is surface-modified by exposing the nanocrystalline cellulose to a gas phase of acid halogenide such as palmitoyl chloride. The resulting esterification reaction however results in the formation of highly corrosive, gaseous hydrochloric acid.
WO2010/066905 A1 disclose a process for manufacturing surface modified cellulose nanofibers in which the cellulose nanofibers are reacted with an alkoxysilane compound capable of reacting with the hydroxyl group of the anhydroglucose units. The reaction can either be carried out in solution or in a phase of the neat alkoxysilane compound. The resulting compounds have the structure cellulose-O-Si(OR)-X, where X is selected from a group of compounds, but where none of said compounds is a saturated alkane of less than 4 carbon atoms.
In view of the above, a known way to render biopolymer particles more hydrophobic is thus esterification of available hydroxyl groups of the anhydroglucose units. However, esterification reactions are not very efficient when using carboxylic acids alone and require harsh reaction conditions. Alternatively, more aggressive chemicals such as acid chlorides or anhydrides may be used but they result in the production of noxious by-products.
An alternative to esterification with free acid or acid halogenide is transesterification, in which an ester compound transfers its carboxylate residue to an acceptor molecule featuring an available hydroxyl moiety. Nevertheless, transesterification reactions are normally carried out in a reaction solvent, in which the instant case of biopolymers can be problematic due to the partial dissolution of the native molecular structure of the biopolymer in the solvent. The disruption of the native structure of the biopolymer is however not desirable, since it in essence results in a decrease of the mechanical properties that arise from the native molecular structure of the biopolymer for the sake of hydrophobization. Another drawback of performing reactions in a separate reaction solvent, or mixtures of solvents, is that the ensuing work-up of the reaction mixture requires the separation of solvents, reactants and impurities which can make a reaction work-intensive, and hence cost-intensive.
There is therefore a desire to provide for a process in which the hydrophobicity of a biopolymer having anhydroglucose units can be fine-tuned to the hydrophobicity of a given polymer matrix, but which does nonetheless not significantly affect the molecular structure of the biopolymer and which simplifies the entire process, in particular with respect to the separation or work-up of the reactants and/or solvents.

SUMMARY OF THE INVENTION

The present invention thus provides for a process in which the hydrophobicity of a biopolymer comprising anhydroglucose units can be tailored to the hydrophobicity of a matrix polymer, and which does not require the use of solvents during the chemical reaction resulting in the change of hydrophobicity and which can be carried out under mild conditions without giving rise to noxious chemicals and allows simplyfing the work-up process. The resulting particulate acylated modified biopolymer can be used as a reinforcing agent in polymer composites.
In a first aspect, the present invention provides for a process for the preparation of a particulate acylated biopolymer comprising anhydroglucose units, said process comprising the steps of

a. dispersing an amount of particulate non-surface modified biopolymer comprising anhydroglucose units in an amount of a liquid alkenyl carboxylate, or of a mixture of two or more liquid alkenyl carboxylates, in order to form a first dispersion,
b. adding a catalytic composition to the first dispersion such a to form a second dispersion,
c. heating the second dispersion to a temperature above ambient temperature
d. cooling the second dispersion to ambient temperature,
e. isolating the obtained particulate acylated biopolymer,

wherein the amount of a liquid alkenyl carboxylate, or a mixture of two or more liquid alkenyl carboxylates, corresponds to a molar excess of alkenyl carboxylate, the molar excess being defined with respect to the moles of anhydroglucose units comprised in the amount of the particulate non-surface modified biopolymer, and wherein the catalytic composition comprises an amount of one, or two or more, non-nucleophilic bases.

In an embodiment of the first aspect of the invention, the acylation of the anhydroglucose units is made at the C2, C3, C4 or C6 hydroxyl groups, more preferably at the C6 hydroxyl groups of the anhydroglucose units.

In a further embodiment of the first aspect of the invention, the liquid alkenyl carboxylate is chosen from the group of vinyl carboxylates, the carboxylate being preferably chosen from linear carboxylates having from 4 to 20 carbon atoms, and more preferably from linear carboxylates having 4 to 12 carbon atoms, such as for example vinyl laurate or vinyl butyrate, and/or wherein the catalytic composition comprises non-nucleophilic bases that are guanidine derivatives or amidine derivatives, and preferably are a bicyclic amidine derivatives or bicylic guanidine derivatives and most preferably are DBU (1,8-Diazabicyclo[5.4.0]undec-7-ene), TMG (tetramethylguanidine) or TBD (1,5,7-triazabicyclo[4.4.0]dec-5-ene).

In a further embodiment of the first aspect of the invention, the amount of non-nucleophilic base in the catalytic composition ranges of from 0.02 to 0.5 moles per mole of anhydroglucose units comprised in the amount of the particulate non-surface modified biopolymer and/or the amount of liquid alkenyl carboxylate ranges of from 2 to 50 moles per moles of anhydroglucose units comprised in the amount of the particulate non-surface modified biopolymer, preferably of from 2 to 25 moles, and more preferably of from 2 to 15 moles.

In a further embodiment of the first aspect of the invention, in step c. the second dispersion is heated to a temperature of from 50 °C to 140 °C, preferably to a temperature of from 60 ° to 120 °C, more preferably to a temperature of from 60 ° to 110 °C.

In a further embodiment of the first aspect of the invention, in step a. dispersing an amount of particulate non-surface modified biopolymer comprising anhydroglucose units in an amount of a liquid alkenyl carboxylate, or of a mixture of two or more liquid alkenyl carboxylates, in order to form a first dispersion, is made by (i) providing a dispersion of particulate non-surface modified biopolymer in an aqueous solution of morpholine, piperidine or a mixture of both, (ii) exchanging the aqueous solution of morpholine, piperidine or a mixture of both, for at least the same amount of solvent that is preferably freely miscible with water and/or the aqueous solution of morpholine, piperidine or a mixture of both, and non-dissolving for the biopolymer to form a dispersion of particulate non-surface modified biopolymer in said solvent (iii) adding an amount of liquid alkenyl carboxylate or of a mixture of two or more liquid alkenyl carboxylates to form an intermediate dispersion of particulate non-surface modified biopolymer in a mixture of solvent and liquid alkenyl carboxylate, or of a mixture of two or more liquid alkenyl carboxylates, and (iv) removing the solvent to form the first dispersion. The solvent may be a protic or an aprotic solvent, with aprotic solvents being preferred. Exemplary protic solvents are alcohols such as ethanol, 1-propanol, 2-propanol, 1-butanol, 2-butanol, t-butanol. Exemplary aprotic solvents may be chosen from ketones such as acetone or butanone, ethers such as tetrahydrofuran, diethyl ether, methyoxypropane, dipropyl ether, nitriles such as ethane nitrile, propane nitrile, butane nitrile, or glycol ethers such as ethylene glycol methyl ether, ethylene glycol propyl ether, ethylene glycol butyl ether, propylene glycol methyl ether, propylene glycol propyl ether, propyl glycol butyl ether or their corresponding glycol ether acetates, and esters such methyl acetate, propyl acetate, isopropyl acetate, butyl acetate. Preferably the aprotic solvent is a ketone such as acetone or butanone. In general, the solvent should be chosen such that it can be removed from the intermediate dispersion by a decrease in temperature and/or heating without significant loss of alkenyl carboxylate in order to yield the first dispersion.

In a preferred embodiment of the first aspect of the invention, the dispersion of particulate non-surface modified biopolymer in an aqueous solution of morpholine, piperidine or a mixture of both is provided by subjecting a mixture of a precursor material for the particulate non-surface modified biopolymer and aqueous solution of morpholine, piperidine or a mixture of both to medium shear and optionally to high shear or high pressure to form a dispersion of particulate non-surface modified biopolymer in an aqueous solution of morpholine, piperidine or a mixture of both. The aqueous solution of morpholine, piperidine or a mixture of both may preferably comprise, or consists of, 70 to 98 weight percent of morpholine, piperidine or a mixture of both, the weight percent being based on the weight of the aqueous solution of morpholine, piperidine or a mixture of both.

In a further embodiment of the first aspect of the invention, the precursor material for the particulate non-surface modified biopolymer is cellulose fibre pulp and is preferably chosen from bleached softwood or hardwood pulp obtained through the Kraft or sulphite process and/or the cellulose fibre pulp having a degree of polymerization of from 500 to 1100.

In a further embodiment of the first aspect of the invention, in the particulate non-surface modified biopolymer is non-surface modified nanocellulose such as crystalline nanocellulose (CNC) or nanofibrillated cellulose (NFC).

The present disclosure provides for particles of acylated biopolymer comprising anhydroglucose units, obtained through the above process having a degree of carboxylate substitution of from 0.05 to 0.75, preferably of from 0.05 to 0.3.

The present disclosure also provides for polymer composites comprising one or more matrix polymers and particles of acylated biopolymer, where the particles of acylated biopolymer are dispersed in said one or more matrix polymer.

Further embodiments of the invention are laid down in the dependent claims.

DESCRIPTION OF PREFERRED EMBODIMENTS

In a first aspect of the invention, there is provided a process for the preparation of a particulate acylated biopolymer comprising anhydroglucose units, said process comprising the steps of a. dispersing an amount of particulate non-surface modified biopolymer comprising anhydroglucose units in an amount of a liquid alkenyl carboxylate, or of a mixture of two or more liquid alkenyl carboxylates, in order to form a first dispersion, b. adding a catalytic composition to the first dispersion such a to form a second dispersion, c. heating the second dispersion to a temperature above ambient temperature, d. cooling the second dispersion to ambient temperature, e. isolating the obtained particulate acylated biopolymer, wherein the amount of a liquid alkenyl carboxylate, or a mixture of two or more liquid alkenyl carboxylates, corresponds to a molar excess of alkenyl carboxylate, the molar excess being defined with respect to the moles of anhydroglucose units comprised in the amount of the particulate non-surface modified biopolymer, and wherein the catalytic composition comprises an amount of one, or two or more, non-nucleophilic bases. Dispersing an amount of particulate non-surface modified biopolymer comprising anhydroglucose units in an amount of a liquid alkenyl carboxylate, or of a mixture of two or more liquid alkenyl carboxylates, in order to form a first dispersion may be achieved by combining an amount of particulate non-surface modified biopolymer comprising anhydroglucose units with an amount of a liquid alkenyl carboxylate and comminuting the thus formed mixture in a comminuting device capable of dispersing the biopolymer in a liquid, such as for example comminuting devices sold under the trademark ULTRA-TURRAX® T25 instruments by IKA®-Werke GmbH & Co. KG.

In the first dispersion, the volume of liquid alkenyl carboxylate can be chosen such that the particulate non-surface modified biopolymer comprising anhydroglucose units is in contact with, or submerged in, liquid alkenyl carboxylate.

In the case a mixture of two or more liquid alkenyl carboxylates, the two or more liquid alkenyl carboxylates are preferably also chosen from the group of vinyl carboxylates, the carboxylate being preferably chosen from linear carboxylates having from 4 to 20 carbon atoms, and more preferably from linear carboxylates having 4 to 12 carbon atoms, such as for example vinyl laurate or vinyl butyrate. It should be noted that in any case, the use of liquid alkyl carboxylates, such as for example methyl esters, is excluded from the present invention since alkyl carboxylates do not result in an esterification reaction when using the catalytic compounds according to the invention.

The addition of the catalytic composition to the first dispersion such a to form a second dispersion can be brought about by either adding the neat catalytic composition to the first dispersion or by first dissolving the catalytic composition in an amount of liquid alkenyl carboxylate.

The heating of the second dispersion to a temperature above ambient temperature is generally achieved on a laboratory scale by placing a round bottom flask into a temperature-controlled oil bath set to the desired temperature.

The cooling of the previously heated second dispersion to ambient temperature can be made by either letting the second dispersion passively cool or actively cooling it. On a laboratory scale, passive cooling has been proven useful, while in an industrial process, active cooling may be required in order to attain a given production rate.

The isolating of the then obtained particulate acylated biopolymer can be achieved by multiple methods, and in a preferred embodiment the particulate acylated biopolymer is isolated by (a) filtering the second dispersion in order to form a wet filter cake of particulate acylated biopolymer, by (b) repeatedly washing the wet filter cake with a solvent in order to wash away the liquid alkenyl carboxylate, to form a washed wet filter cake, and followed by (c) decreasing the pressure to a level where the solvent remaining on the wet washed filter cake evaporates, in order to yield the particulate acylated polymer. The steps of filtering and washing can either be driven by applying an underpressure (e.g vacuum filtration/washing) or by acceleration (e.g. centrifugal filtration/washing).

The present invention allows for the sole use of a liquid alkenyl carboxylate as both reaction solvent and reactant by choosing the amount of liquid alkenyl carboxylate, or eventually a mixture of two or more liquid alkenyl carboxylates such that it corresponds to a molar excess of alkenyl carboxylate with respect to the moles of anhydroglucose units comprised in the amount of the particulate non-surface modified biopolymer. In order to accelerate the esterification reaction, the catalytic composition comprises an amount of one, or two or more, non-nucleophilic bases.

The liquid alkenyl carboxylate is chosen from the group of vinyl carboxylates, the carboxylate being preferably chosen from linear carboxylates having from 4 to 20 carbon atoms, and more preferably from linear carboxylates having 4 to 12 carbon atoms, such as for example vinyl laurate or vinyl butyrate. It should be noted that when using the catalytic compounds according to the invention, alkenyl carboxylate having branched carboxylates do not undergo an esterification reaction.

The catalytic composition comprises, or consists of, non-nucleophilic bases that are guanidine derivatives such as TMG or amidine derivatives, and preferably are a bicyclic amidine derivatives such as DBU or DBN, or bicylic guanidine derivatives such as TBD. Preferably, the catalytic composition consists of bicyclic amidine derivatives such as DBU or DBN.

The process according to the present invention can accept particulate non-surface modified biopolymer that has been generated in-line of a production process, such as the process described in European patent application EP 13 735 325.6, which yields a dispersion of particulate non-surface modified biopolymer in an aqueous solution of morpholine, piperidine or a mixture of both, and in particular a dispersion of particulate non-surface modified nanocellulose in an aqueous solution having 70 - 99% (by volume) of morpholine, piperidine or mixtures thereof. In essence, such a dispersion of particulate non-surface modified biopolymer in an aqueous solution of morpholine, piperidine or a mixture of both is obtained by subjecting a mixture of a precursor material for the particulate non-surface modified biopolymer such as for example cellulose fibre pulp and aqueous solution of morpholine, piperidine or a mixture of both, to a comminution treatment that exerts medium shear, and optionally to high shear or high pressure, on the mixture to form a dispersion of particulate non-surface modified biopolymer in an aqueous solution of morpholine, piperidine or a mixture of both. A suitable precursor is for example high purity chemical cellulose or dissolving pulp". The shear acts by removing the unwanted peripheral amorphous regions of the biopolymer precursor to yield the dispersion of particulate, and crystalline, non-surface modified biopolymer that has never been dried before.

Thus, it is possible that the first dispersion is obtained by (i) providing a dispersion of particulate, and preferably crystalline, non-surface modified biopolymer in an aqueous solution of morpholine, piperidine or a mixture of both, (ii) exchanging the aqueous solution of morpholine, piperidine or a mixture of both, for at least the same amount of solvent, such as for example acetone, to form a dispersion of particulate non-surface modified biopolymer in said solvent (iii) adding an amount of liquid alkenyl carboxylate or of a mixture of two or more liquid alkenyl carboxylates to form an intermediate dispersion of particulate non-surface modified biopolymer in a mixture of solvent and liquid alkenyl carboxylate, or of a mixture of two or more liquid alkenyl carboxylates, and (iv) removing the solvent to form the first dispersion. Exchanging the aqueous solution of morpholine, piperidine or a mixture of both for the solvent can be carried out by diafiltration, for example by using a PTFE membrane having a 50 nm pore size. In general, the solvent for both the intermediate dispersion and the washing should be chosen (without necessarily being the same) such that it does not damage the internal molecular structure of the biopolymer (i.e. not solubilizing the biopolymer) and should be chosen such that it can be removed, preferably by evaporation, from the intermediate dispersion without significant loss of liquid alkenyl carboxylate (e.g. a lower boiling point) and such that it should be miscible with the aqueous solution of morpholine, piperidine or a mixture of both. Exemplary solvents include ketones such as acetone or butanone, or alcohols such as methanol or ethanol. The removal of the solvent can be carried out by evaporation of the solvent, for example by heating the intermediate dispersion or by reducing the pressure, or a combination thereof. After removing the solvent, a dispersion of particulate non-surface modified biopolymer in liquid alkenyl carboxylate is yielded.

After heating the dispersion of particulate non-surface modified biopolymer in liquid alkenyl carboxylate to perform the esterification reaction and cooling the reaction mixture, the particulate acylated biopolymer is isolated by (a) filtering away the liquid alkenyl carboxylate of the second dispersion, (b) washing the retained particulate acylated biopolymer with a solvent until essentially the alkenyl carboxylate is removed, and (c) evaporating any remaining solvent in order to yield the particulate acylated biopolymer. The steps of filtering and washing can either be driven by applying an underpressure (e.g vacuum filtration/washing) or by acceleration (e.g. centrifugal filtration/washing). While the solvent used to wash the retained particulate acylated biopolymer is only in short contact with the biopolymer, it is nonetheless preferable that the solvent is a solvent that is not capable of damaging the native molecular structure of the biopolymer, since it is of importance to the mechanical properties that the biopolymer particles will eventually confer to the composite polymer material in which they are used.

Thus in a much preferred embodiment, the process for the preparation of particulate acylated nanocellulose comprises the steps of a. (i) providing a dispersion of never-dried, nanocellulose in an aqueous solution of 70 to 98% by weight or 76 - 80% by weight of morpholine, (ii) exchanging the aqueous solution of morpholine for at least the same amount of acetone to form a dispersion of nanocellulose in acetone (iii) adding vinyl carboxylate to form an intermediate dispersion of nanocellulose in a liquid mixture of acetone and liquid alkenyl carboxylate, and (iv) removing the acetone in order to form a first dispersion, b. adding a catalytic composition to the first dispersion such a to form a second dispersion, c. heating the second dispersion to a temperature of between 60 to 110 °C, d. cooling the second dispersion to ambient temperature, e. isolating the obtained acylated nanocellulose, wherein the amount of a liquid alkenyl carboxylate corresponds at least to a 2-fold molar excess of alkenyl carboxylate, the molar excess being defined with respect to the moles of anhydroglucose units comprised in the amount nanocellulose, the alkenyl carboxylate is a vinyl carboxylate where the carboxylate is a C4 to C12 linear, preferably saturated, carboxylate such as vinyl laurate and wherein the catalytic composition consists of a bicyclic amidine base. The use of never-dried nanocellulose ensures that the crystallinity of the nanocellulose is not degraded by an intermediate drying step and ensures irreversible aggregation by drying is prevented and that correspondingly, the resulting acylated nanocellulose is as crystalline as can be, thus allowing to confer excellent mechanical properties when used in a polymer composite. The use of a vinyl ester as reactant also allows easily removing the resulting vinyl alcohol, which tautomerizes to acetaldehyde, by evaporation. Also, nucleophilic bases such amidines and guanidines are in general soluble in the vinyl carboxylates used and can be recovered with the unspent vinyl carboxylate.

The particles of acylated biopolymer comprising anhydroglucose units, obtained through the process described above, may have a degree of substitution of from 0.05 to 0.75, preferably of from 0.05 to 0.3, when measured as described in the Examples section.

The present disclosure also provides for a polymer composite comprising one or more matrix polymers and particles of acylated biopolymer, where the particles of acylated biopolymer are dispersed in said one or more matrix polymers. The matrix polymer can be any known polymer such as polycondensates such as polyamides, polyurethanes, polyesters, polyester-ethers or polyethers and polyolefins such as polyethylenes. In a preferred embodiment the polymer is chosen from polyolefins, and in particular from polyethylenes and polypropylenes.

EXPERimental data

**Example 1**

The nanocellulose substrate was derived from bleached eucalyptus sulphite dissolving pulp (DP ~ 800), received in sheet form, that was first shredded and soaked in a swelling medium of 78% w/w aqueous morpholine. The swollen pulp suspension was then processed (x5 passes) through a M-110-EH Microfluidizer Processor (Idex Corp), fitted with a 200 micron ceramic auxiliary processing unit and 100 micron diamond interaction chamber (H-10Z). The nanocellulose was isolated as a dry powder by washing into water via multiple centrifugation/decantation steps and subsequent freeze drying.

The thus obtained dry nanocellulose [1.0 g, equivalent to 6.17 mmol in terms of constituent anhydroglucose units (AGU)] was then suspended in the requisite amount of alkenyl carboxylate in a 100ml round bottomed flask, catalyst added and heated by means of an external oil bath, stirring with a magnetic stirrer and PTFE coated stirrer bar. On cooling, the surface modified product was collected at the pump on a sinter and washed with several aliquots of acetone (total 50 ml) followed by drying under reduced pressure (22 °C, 100 mbar). Reaction conditions are summarised in Table 1.

The extent of surface acylation of the nanocellulose was determined by ATR-FTIR spectroscopy using a Perkin Elmer FTIR Frontier spectrophotometer fitted with a KRS-5 crystal. Spectra were recorded with 16 scans, with a resolution of 4 cm$^{-1}$, over the range 4000 - 450 cm$^{-1}$. The data were processed using PerkinElmer Spectrum software, plotting absorbance as ordinate. An apparent degree of substitution (DS) was estimated from the ratio of the heights of the ester carbonyl stretch peak at 1738 cm$^{-1}$ and the peak corresponding to the -C-O-C- deformation of the saccharide units at 1160 cm$^{-1}$. The measured peak ratio was converted into an apparent DS value by reference to a known calibration standard of commercial cellulose triacetate (reported DS = 2.48). The peak ratio $A_{1738}/A_{1160}$ = 8.75 for the calibration standard.

The apparent DS may therefore be estimated from the peak ratio for a given sample as follows:

$$DS = (A_{1738}/A_{1160}) \times (2.45/8.75)$$

Table 1 - Results summary Example 1

| Reference | Alkenyl Carboxylate | Catalyst | Reaction time / min | Reaction temperature / °C | Apparent DP |
|---|---|---|---|---|---|
| Example 1.1 | vinyl laurate - 8 eq/AGU | DBU - 0.2 eq/AGU | 300 | 100 | 0.11 |
| Example 1.2 | vinyl laurate - 12 eq/AGU | DBU - 0.2 eq/AGU | 300 | 100 | 0.10 |
| Example 1.3 | vinyl laurate - 15 eq/AGU | DBU - 0.2 eq/AGU | 300 | 100 | 0.09 |

(continued)

| Reference | Alkenyl Carboxylate | Catalyst | Reaction time / min | Reaction temperature / °C | Apparent DP |
|---|---|---|---|---|---|
| Example 1.4 | vinyl laurate - 8 eq/AGU | DBU - 0.2 eq/AGU | 90 | 100 | 0.08 |
| Example 1.5 | vinyl laurate - 8 eq/AGU | DBU - 0.2 eq/AGU | 180 | 100 | 0.11 |
| Example 1.6 | vinyl laurate - 8 eq/AGU | DBU - 0.2 eq/AGU | 360 | 100 | 0.12 |
| Example 1.7 | vinyl laurate - 8 eq/AGU | DBU - 0.2 eq/AGU | 960 | 100 | 0.14 |
| Example 1.8 | vinyl laurate - 8 eq/AGU | DBU - 0.05 eq/AGU | 300 | 100 | 0.05 |
| Example 1.9 | vinyl laurate - 8 eq/AGU | DBU - 0.1 eq/AGU | 300 | 100 | 0.08 |
| Example 1.10 | vinyl laurate - 8 eq/AGU | DBU - 0.15 eq/AGU | 300 | 100 | 0.10 |
| Example 1.11 | vinyl laurate - 8 eq/AGU | DBU - 0.4 eq/AGU | 300 | 100 | 0.20 |
| Example 1.12 | vinyl laurate - 8 eq/AGU | DBU - 0.2 eq/AGU | 180 | 90 | 0.13 |
| Example 1.13 | vinyl laurate - 8 eq/AGU | DBU - 0.2 eq/AGU | 180 | 80 | 0.12 |
| Example 1.14 | vinyl laurate - 8 eq/AGU | DBU - 0.2 eq/AGU | 180 | 70 | 0.14 |
| Example 1.15 | vinyl laurate - 8 eq/AGU | DBU - 0.2 eq/AGU | 3900 | 20 | <0.02 |
| Example 1.16 | vinyl laurate - 8 eq/AGU | DBN - 0.2 eq/AGU | 300 | 100 | 0.10 |
| Example 1.17 | vinyl laurate - 8 eq/AGU | TBD - 0.2 eq/AGU | 300 | 100 | ~ 0 |
| Example 1.18 | vinyl laurate - 8 eq/AGU | TMG - 0.2 eq/AGU | 300 | 100 | 0.04 |
| AGU = anhydroglucose unit<br>DBU = 1,8-diazabicyclo[5.4.0]undec-7-ene; DBN = 1,5-diazabicyclo[4.3.0]non-5-ene<br>TBD = 1,5,7-triazabicyclo[4.4.0]dec-5-ene; TMG = tetramethylguanidine | | | | | |

### Example 2

The dry nanocellulose substrate was obtained as in Example 1. Dry nanocellulose [20.0 g, equivalent to 0.123 mol in terms of constituent anhydroglucose units] was suspended in the requisite amount of an alkenyl carboxylate [equivalent to 8 molar equivalents per anhydroglucose units of the nanocellulose substrate] in a 500ml round bottomed flask, and 3.7 ml DBU [equivalent to 24.6 mmol, 0.2 eq/AGU] were added and the reaction mixture heated (70 °C, 3 hours) by means of an external oil bath, stirring with a magnetic stirrer and PTFE coated stirrer bar. On cooling, the surface modified product was collected at the pump on a sinter and washed with several aliquots of acetone (total 200 ml) followed by drying under reduced pressure (22 °C, 100 mbar). Reaction conditions are summarized in Table 2. The extent of surface acylation of the nanocellulose was determined by ATR-FTIR spectroscopy as in Example 1.

Table 2 - Results summary Example 2

| Reference | Alkenyl Carboxylate | Catalyst - | Reaction time / min | Reaction temperature / °C | Apparent DP |
|---|---|---|---|---|---|
| Example 2.1 | vinyl butyrate - 128 ml | DBU - 3.7 ml | 180 | 70 | 0.25 |
| Example 2.2 | vinyl hexanoate - 159 ml | DBU - 3.7 ml | 180 | 70 | 0.20 |
| Example 2.3 | vinyl octanaote - 192 ml | DBU - 3.7 ml | 180 | 70 | 0.17 |
| Example 2.4 | vinyl decanoate - 225 ml | DBU - 3.7 ml | 180 | 70 | 0.19 |
| Example 2.5 | vinyl laurate - 196 ml | DBU - 3.7 ml | 180 | 70 | 0.15 |

**Example 3**

300g of a nanocellulose suspension in water having a dry solids content of approx. 3.1 % by weight was prepared in a refiner and then subjected to a process of continuous phase exchange via diafiltration using a 50 nm pore size PTFE membrane in which the original aqueous continuous phase was replaced with an equivalent volume of acetone. Further acetone was added to lower the viscosity as required. To this nanocellulose suspension in acetone was added vinyl laurate (300 g) and the acetone removed under reduced pressure. To this resultant suspension of nanocellulose in the alkenyl carboxylate in a 2 litre 5-necked reactor fitted with overhead stirrer and condenser was added 1,8-diazabicyclo[5.4.0]undec-7-ene (2.6 g) and the system maintained at 70 °C for 3 hours with continuous agitation. During this time the colour of the reaction medium changed gradually from pale yellow to dark brown. On cooling to ambient temperature, the product was collected at the pump on a sinter and excess vinyl laurate removed, before washing with several aliquots of hexane (total). On drying in a vacuum oven (20 °C, 100 mbar) the product (nanocelluose with lauryl surface modification) was obtained as a finely divided white solid with apparent degree of substitution of 0.23 (ATR FTIR, method as Example 1).

**Example 4**

The nanocellulose suspension in water prepared as in Example 3 was diluted by addition of water to a dry solids content of approx. 1% by weight and then further processed (x5 passes) through a M-110-EH Microfluidizer Processor (Idex Corp), fitted with a 200 micron ceramic auxillary processing unit and 100 micron diamond interaction chamber (H-10Z).

The resultant nanocellulose suspension was then subjected to a process of continuous phase exchange via diafiltration using a 50 nm pore size PTFE membrane, in which the original aqueous continuous phase was replaced with 300 g of acetone. To this nanocellulose suspension in acetone was added vinyl laurate (300 g) and the acetone removed under reduced pressure. To this resultant suspension of nanocellulose in the alkenyl carboxylate was added 1,8-diazabicyclo[5.4.0]undec-7-ene (2.6 g) and the system maintained at 70 °C for three hours. During this time the colour of the reaction medium changed gradually from pale yellow to dark brown. On cooling to ambient temperature, the product was collected at the pump on a sinter and excess vinyl laurate removed, before washing with several aliquots of hexane. On drying in a vacuum oven (20 °C, 100 mbar) the product (nanocellulose with laurate surface modification) was obtained as a finely divided white solid with apparent degree of substitution of 0.21 (FTIR, method as Example 1).

**Example 5**

To a nanocellulose suspension in acetone prepared as in Example 3 was added vinyl laurate (300 g) and the acetone removed under reduced pressure. To this resultant suspension of nanocellulose in the alkenyl carboxylate in a 2 litre 5-necked reactor fitted with overhead stirrer and condenser was added 1,8-diazabicyclo[5.4.0]undec-7-ene (2.6 g) and the system maintained at 70 °C for 3 hours with continuous agitation. During this time the colour of the reaction medium changed gradually from pale yellow to dark brown. On cooling to ambient temperature, the product was collected at the pump on a sinter and excess vinyl laurate removed under reduced pressure, before washing with several aliquots of hexane (total 100 g). On drying in a vacuum oven (20 °C, 100 mbar) the product (nanocelluose with lauryl surface modification) was obtained as a finely divided white solid with apparent degree of substitution of 0.26 (ATR FTIR, method as Example 1).

**Example 6**

A nanocellulose suspension in 78% w/w aqueous morpholine previously prepared in a refiner (dry solids content ~ 4.7 %) was diluted by addition of further aqueous morpholine (to a dry solids content ~ 1%) and then further processed (x5 passes) through a M-110-EH Microfluidizer Processor (Idex Corp), fitted with a 200 micron ceramic auxiliary processing unit and 100 micron diamond interaction chamber (H-10Z). The resultant suspension was then subjected to a process of continuous phase exchange via diafiltration using a 50 nm pore size PTFE membrane, in which the original aqueous continuous phase was replaced with 300 g of acetone. To this nanocellulose suspension in acetone was added vinyl laurate (300 g) and the acetone removed under reduced pressure. To this resultant suspension of nanocellulose in the alkenyl carboxylate was added 1,8-diazabicyclo[5.4.0]undec-7-ene (2.6 g) and the system maintained at 70 °C for three hours. During this time the colour of the reaction medium changed gradually from pale yellow to dark brown. On cooling to ambient temperature, the product was collected at the pump on a sinter and excess vinyl laurate removed under reduced pressure, before washing with several aliquots of hexane. On drying in a vacuum oven (30 °C, 100 mbar) the product (nanocellulose with laurate surface modification) was obtained as a finely divided white solid with apparent degree of substitution of 0.27 (FTIR, method as Example 1).

**Example 7**

A nanocellulose suspension in 78% w/w aqueous morpholine previously prepared in a refiner (dry solids content ~ 4.7 %) was diluted by addition of further aqueous morpholine (to dry solids content ~ 1%) and then further processed (x5 passes) through a M-110-EH Microfluidizer Processor (Idex Corp), fitted with a 200 micron ceramic auxiliary processing unit and 100 micron diamond interaction chamber (H-10Z). The resultant suspension was then subjected to a process of continuous phase exchange via diafiltration using a 50 nm pore size PTFE membrane, in which the original continuous phase was replaced with 250 g of acetone. To this nanocellulose suspension in acetone was added vinyl butyrate (250 g) and the acetone removed under reduced pressure. To this resultant suspension of nanocellulose in the alkenyl carboxylate was added 1,8-diazabicyclo[5.4.0]undec-7-ene (2.6 g) and the system maintained at 70 °C for three hours. During this time the colour of the reaction medium changed gradually from pale yellow to dark brown. On cooling to ambient temperature, the product was collected at the pump on a sinter and excess vinyl laurate removed under reduced pressure, before washing with several aliquots of ethyl acetate. On drying in a vacuum oven (30 °C, 100 mbar) the product (nanocellulose with butyrate surface modification) was obtained as a finely divided white solid with apparent degree of substitution of 0.32 (FTIR, method as Example 1).

**Claims**

1. A process for the preparation of particulate acylated biopolymer comprising anhydroglucose units, said process comprising the steps of

   a. dispersing an amount of particulate non-surface modified biopolymer comprising anhydroglucose units in an amount of a liquid alkenyl carboxylate, or of a mixture of two or more liquid alkenyl carboxylates, in order to form a first dispersion,
   b. adding a catalytic composition to the first dispersion such a to form a second dispersion,
   c. heating the. second dispersion to a temperature above ambient temperature
   d. cooling the second dispersion to ambient temperature,
   e. isolating the obtained particulate acylated biopolymer,

   wherein the amount of a liquid alkenyl carboxylate, or a mixture of two or more liquid alkenyl carboxylates, corresponds to a molar excess of alkenyl carboxylate, the molar excess being defined with respect to the moles of anhydroglucose units comprised in the amount of the particulate non-surface modified biopolymer, and wherein the catalytic composition comprises an amount of one, or two or more, non-nucleophilic bases.

2. The process according to claim 1, wherein the acylation of the anhydroglucose units is made at the C2, C3, C4 or C6 hydroxyl groups, more preferably at the C6 hydroxyl groups of the anhydroglucose units.

3. The process according to claim 1 or 2, wherein the liquid alkenyl carboxylate is chosen from the group of vinyl carboxylates, the carboxylate being preferably chosen from linear carboxylates having from 4 to 20 carbon atoms, and more preferably from linear carboxylates having 4 to 12 carbon atoms, such as for example vinyl laurate or vinyl butyrate, and/or wherein the catalytic composition comprises non-nucleophilic bases that are guanidine derivatives such as TMG or amidine derivatives, and preferably are a bicyclic amidine derivatives such as DBU or DBN, or bicylic guanidine derivatives such as TBD.

4. The process according to any preceding claim wherein the amount of non-nucleophilic base in the catalytic composition ranges of from 0.02 to 0.5 moles per mole of anhydroglucose units comprised in the amount of the particulate non-surface modified biopolymer and/or the amount of liquid alkenyl carboxylate ranges of from 2 to 50 moles per moles of anhydroglucose units comprised in the amount of the particulate non-surface modified biopolymer, preferably of from 2 to 25 moles, and more preferably of from 2 to 15 moles.

5. The process according to any preceding claim wherein, in step a. the first dispersion is obtained by (i) providing a dispersion of particulate non-surface modified biopolymer in an aqueous solution of morpholine, piperidine or a mixture of both, (ii) exchanging the aqueous solution of morpholine, piperidine or a mixture of both, for at least the same amount of solvent to form a dispersion of particulate non-surface modified biopolymer in said solvent (iii) adding an amount of liquid alkenyl carboxylate or of a mixture of two or more liquid alkenyl carboxylates to form an intermediate dispersion of particulate non-surface modified biopolymer in a mixture of solvent and liquid alkenyl carboxylate, or of a . mixture of two or more liquid alkenyl carboxylates, and (iv) removing the solvent to form the first dispersion.

6. The process according to any preceding claim wherein the second dispersion is heated to a temperature of from 50 °C to 140 °C, preferably to a temperature of from 60 °C to 110 °C.

7. The process according to any preceding claim wherein in step e. the particulate acylated biopolymer is isolated by (a) filtering away the liquid alkenyl carboxylate of the second dispersion, (b) washing the retained particulate acylated biopolymer with a solvent until essentially the alkenyl carboxylate is removed, and (c) evaporating any remaining solvent in order to yield the particulate acylated biopolymer.

8. The process according to claim 5, wherein the dispersion of particulate non-surface modified biopolymer in an aqueous solution of morpholine, piperidine or a mixture of both is provided by subjecting a mixture of a precursor material for the particulate non-surface modified biopolymer and aqueous solution of morpholine, piperidine or a mixture of both to a comminution treatment that exerts medium shear, and optionally to high shear or high pressure, on the mixture to form a dispersion of particulate non-surface modified biopolymer in an aqueous solution of morpholine, piperidine or a mixture of both.

9. The process according to claim 8, wherein the precursor material for the particulate non-surface modified biopolymer is cellulose fibre pulp and is preferably chosen from bleached softwood or hardwood pulp obtained through the Kraft or sulphite process and/or the cellulose fibre pulp having a degree of polymerization offrom500 to 1100.

10. The process according to any preceding claim, wherein the particulate non-surface modified biopolymer is non-surface modified nanocellulose such as crystalline nanocellulose (CNC) or nanofibrillated cellulose (NFC), more preferably never-dried non-surface modified nanocellulose.

**Patentansprüche**

1. Verfahren zur Herstellung eines partikulären acylierten Biopolymers, welches Anhydroglukose-Einheiten aufweist, wobei das besagte Verfahren die folgenden Schritte aufweist:

   a. Dispergieren einer Menge von partikulärem nicht-oberflächenmodifiziertem Biopolymer, welches Anhydroglukose-Einheiten in einer Menge eines flüssigen Alkenyl-Carboxyls aufweist, oder einer Mischung von zwei oder mehr flüssigen Alkenyl-Carboxylen, um eine erste Dispersion herzustellen,
   b. Hinzufügen einer katalytischen Zusammensetzung zur ersten Dispersion, zur Bildung einer zweiten Dispersion,
   c. Erhitzen der zweiten Dispersion auf eine Temperatur oberhalb von Raumtemperatur,
   d. Abkühlen der zweiten Dispersion auf Raumtemperatur,
   e. Isolieren des gewonnenen partikulären acylierten Biopolymers,

wobei die Menge eines flüssigen Alkenyl-Carboxyls, oder einer Mischung von zwei oder mehr flüssigen Alkenyl-Carboxylen, einem molaren Überschuss an Alkenyl-Carboxyl entspricht, wobei der molare Überschuss definiert ist in Bezug auf die Mole von Anhydroglukose-Einheiten, welche in der Menge des partikulären nicht-oberflächenmodifizierten Biopolymers enthalten sind, und wobei die katalytische Zusammensetzung eine Menge von einer nicht-nukleophilen Base, oder zwei, oder mehr nicht-nukleophilen Basen enthält.

2.   Verfahren gemäss Anspruch 1, wobei die Acylierung der Anhydroglukose-Einheiten an den C2, C3, C4, oder C6-Hydroxylgruppen ausgeführt wird, vorzugsweise an den C6-Hydroxylgruppen der Anhydroglukose-Einheiten.

3.   Verfahren gemäss Anspruch 1 oder 2, wobei das flüssige Alkenyl-Carboxyl ausgewählt ist aus der Gruppe von Vinyl-Carboxylen, wobei das Carboxyl vorzugsweise ausgewählt ist aus den linearen Carboxylen, welche 4 bis 20 Kohlenstoff-Atome aufweisen, und insbesondere bevorzugt aus linearen Carboxylen, welche 4 bis 12 Kohlenstoff-Atome aufweisen, wie beispielsweise Vinyl-Laurat oder Vinyl-Butyrat, und/oder wobei die katalytische Zusammensetzung nicht-nukleophile Basen aufweist, welche Guanidin-Derivate sind, wie beispielsweise TMG oder Amidin-Derivate, und vorzugsweise bizyklische Amidin-Derivate sind, wie beispielsweise DBU oder DBN, oder bizyklische Guanidin-Derivate, wie beispielsweise TBD.

4.   Verfahren gemäss einem der vorhergehenden Ansprüche, wobei die Menge der nicht-nukleophilen Base in der katalytischen Zusammensetzung in einem Bereich von 0.02 bis 0.5 Mol pro Mol Anhydroglukose-Einheiten liegt, welche in der Menge des partikulären nicht-oberflächenmodifizierten Biopolymers enthalten sind, und/oder wobei die Menge des flüssigen Alkenyl-Carboxyls in einem Bereich von 2 bis 50 Mol pro Mol Anhydroglukose-Einheiten liegt, welche in der Menge des partikulären nicht-oberflächenmodifizierten Biopolymers enthalten sind, vorzugsweise von 2 bis 25 Mol, und insbesondere bevorzugt von 2 bis 15 Mol.

5.   Verfahren gemäss einem der vorhergehenden Ansprüche, wobei, in Schritt a., die erste Dispersion gewonnen wird durch (i) Bereitstellen einer Dispersion von partikulärem nicht-oberflächenmodifiziertem Biopolymer in einer wässrigen Lösung von Morpholin, Piperidin, oder einer Mischung der beiden, (ii) Ersetzen der wässrigen Lösung von Morpholin, Piperidin, oder einer Mischung der beiden, durch mindestens die gleiche Menge an Lösungsmittel, zur Bildung einer Dispersion von partikulärem nicht-oberflächenmodifiziertem Biopolymer in dem besagten Lösungsmittel, (iii) Hinzufügen einer Menge von flüssigem Alkenyl-Carboxyl oder einer Mischung von zwei oder mehr flüssigen Alkenyl-Carboxylen zur Bildung einer intermediären Dispersion von partikulärem nicht-oberflächenmodifiziertem Biopolymer in einer Mischung von Lösungsmittel und flüssigem Alkenyl-Carboxyl, oder einer Mischung von zwei oder mehr flüssigen Alkenyl-Carboxylen, und (iv) Entfernung des Lösungsmittels zur Bildung der ersten Dispersion.

6.   Verfahren gemäss einem der vorhergehenden Ansprüche, wobei die zweite Dispersion erhitzt wird auf eine Temperatur von 50°C bis 140°C, vorzugsweise auf eine Temperatur von 60°C bis 110°C.

7.   Verfahren gemäss einem der vorhergehenden Ansprüche, wobei in Schritt e. das partikuläre nicht-oberflächenmodifizierte Biopolymer isoliert wird durch (a) Rausfiltern des flüssigen Alkenyl-Carboxyls der zweiten Dispersion, (b) Spülen des gewonnenen partikulären acylierten Biopolymers mit einem Lösungsmittel, bis das Alkenyl-Carboxylat im Wesentlichen entfernt ist, und (c) Verdampfen von allenfalls verbleibendem Lösungsmittel zur Gewinnung des partikulären, acylierten Biopolymers.

8.   Verfahren gemäss Anspruch 5, wobei die Dispersion von partikulärem nicht-oberflächenmodifiziertem Biopolymer in einer wässrigen Lösung von Morpholin, Piperidin oder einer Mischung der beiden bereitgestellt wird, indem eine Mischung eines Vorläufermaterials für das partikuläre, nicht-oberflächenmodifizierte Biopolymer und einer wässrigen Lösung aus Morpholin, Piperidin oder aus einer Mischung der beiden einer Feinzerkleinerungs-Behandlung unterzogen wird, welche die Mischung einer mittleren Scherung aussetzt, und wahlweise hoher Scherung oder hohem Druck aussetzt, um eine Dispersion von partikulärem, nicht-oberflächenmodifiziertem Biopolymer in einer wässrigen Lösung von Morpholin, Piperidin oder einer Mischung der beiden zu bilden.

9.   Verfahren gemäss Anspruch 8, wobei das Vorläufermaterial für das partikuläre nicht-oberflächenmodifizierte Biopolymer Zellulosefaser-Pulpe ist und vorzugsweise ausgewählt ist aus gebleichtem Nadelholzhalbstoff oder Laubholzhalbstoff, welcher durch das Kraft- oder Sulfit-Verfahren gewonnen wurde und/oder wobei die Zellulosefaser-Pulpe einen Polymerisierungsgrad von 500 bis 1100 aufweist.

10.  Verfahren gemäss einem der vorhergehenden Ansprüche, wobei das partikuläre nicht-oberflächenmodifizierte Biopolymer eine nicht-oberflächenmodifizierte Nanozellulose ist, wie beispielsweise kristalline Nanozellulose (CNC) oder nanofibrillierte Zellulose (NFC), insbesondere bevorzugt nie getrocknete nicht-oberflächenmodifizierte Nanozellulose.

## Revendications

1. Un procédé pour la préparation d'un biopolymère acylé particulaire comprenant des unités d'anhydroglucose, ledit procédé comprenant les étapes de

   a. disperser une quantité de biopolymère particulaire non modifié en surface comprenant des unités d'anhydroglucose dans une quantité d'un carboxylate d'alcényle liquide, ou d'un mélange de deux ou plusieurs carboxylates d'alcényle liquides, afin de former une première dispersion,
   b. ajouter une composition catalytique à la première dispersion de manière à former une deuxième dispersion,
   c. chauffer la deuxième dispersion à une température supérieure à la température ambiante
   d. refroidir la deuxième dispersion à température ambiante,
   e. isoler le biopolymère acylé particulaire obtenu,

   dans lequel la quantité d'un carboxylate d'alcényle liquide, , ou d'un mélange de deux ou plusieurs carboxylates d'alcényle liquides, correspond à un excès molaire en carboxylate d'alcényle, l'excès molaire étant défini par rapport aux moles d'unités d'anhydroglucose comprises dans la quantité de biopolymère particulaire non modifié en surface, et dans lequel la composition catalytique comprend une quantité d'une, ou deux ou plusieurs bases non nucléophiles.

2. Le procédé selon la revendication 1, dans lequel l'acylation des unités d'anhydroglucose est effectuée au niveau des groupes hydroxyle C2, C3, C4 ou C6, plus préférablement au niveau des groupes hydroxyle C6 des unités d'anhydroglucose.

3. Le procédé selon la revendication 1 ou 2, dans lequel le carboxylate d'alcényle liquide est choisi dans le groupe des carboxylates de vinyle, le carboxylate étant de préférence choisi parmi les carboxylates linéaires ayant de 4 à 20 atomes de carbone, et plus préférablement parmi les carboxylates linéaires ayant 4 à 12 atomes de carbone des atomes, comme par exemple le laurate de vinyle ou le butyrate de vinyle, et / ou dans lequel la composition catalytique comprend des bases non nucléophiles qui sont des dérivés de guanidine tels que TMG ou des dérivés d'amidine, et sont de préférence des dérivés d'amidine bicycliques tels que DBU ou DBN, ou des dérivés de guanidine bicycliques tels que TBD.

4. Le procédé selon l'une quelconque des revendications précédentes, dans lequel la quantité de base non nucléophile dans la composition catalytique varie de 0,02 à 0,5 mole par mole d'unités d'anhydroglucose comprises dans la quantité de biopolymère particulaire non modifié en surface et / ou la quantité de carboxylate d'alcényle liquide varie de 2 à 50 moles par mole d'unités d'anhydroglucose comprises dans la quantité de biopolymère particulaire non modifié en surface, de préférence de 2 à 25 moles, et plus préférablement de 2 à 15 moles.

5. Le procédé selon l'une quelconque des revendications précédentes, dans lequel, à l'étape a. la première dispersion est obtenue en (i) fournissant une dispersion de biopolymère particulaire non modifié en surface dans une solution aqueuse de morpholine, de pipéridine ou d'un mélange des deux, (ii) échangeant la solution aqueuse de morpholine, de pipéridine ou d'un mélange des deux, pour au moins la même quantité de solvant pour former une dispersion de biopolymère particulaire non modifié en surface dans ledit solvant (iii) ajoutant une quantité de carboxylate d'alcényle liquide ou d'un mélange de deux ou plusieurs carboxylates d'alcényle liquides pour former une dispersion intermédiaire de biopolymère particulaire non modifié en surface dans un mélange de solvant et de carboxylate d'alcényle liquide, ou d'un mélange de deux ou plusieurs carboxylates d'alcényle liquides, et (iv) éliminant le solvant afin de former la première dispersion.

6. Le procédé selon l'une quelconque des revendications précédentes, dans lequel la deuxième dispersion est chauffée à une température de 50 ° C à 140 °C, de préférence à une température de 60 °C à 110° C.

7. Le procédé selon l'une quelconque des revendications précédentes, dans lequel à l'étape e. le biopolymère acylé particulaire est isolé en (a) éliminant par filtration le carboxylate d'alcényle liquide de la deuxième dispersion, (b) en rinçant le biopolymère acylé particulaire retenu avec un solvant jusqu'à ce qu'essentiellement le carboxylate d'alcényle soit éliminé, et (c) évaporant tout solvant restant afin de produire le biopolymère acylé particulaire.

**8.** Le procédé selon la revendication 5, dans lequel la dispersion de biopolymère particulaire non modifié en surface dans une solution aqueuse de morpholine, de pipéridine ou d'un mélange des deux est fournie en soumettant un mélange d'un matériau précurseur pour le biopolymère particulaire non modifié en surface et une solution aqueuse de morpholine, de pipéridine ou d'un mélange des deux à un traitement de broyage qui exerce un cisaillement moyen, et éventuellement à cisaillement élevé ou à haute pression, sur le mélange afin de former une dispersion de biopolymère particulaire non modifié en surface dans une solution aqueuse de morpholine, pipéridine ou un mélange des deux.

**9.** Le procédé selon la revendication 8, dans lequel le matériau précurseur pour le biopolymère particulaire non modifié en surface est de la pâte de fibre de cellulose et est de préférence choisi parmi la pâte de bois tendre ou de bois dur blanchie obtenue par le procédé Kraft ou sulfite et / ou la pâte de fibre de cellulose ayant un degré de polymérisation de 500 à 1100.

**10.** Le procédé selon l'une quelconque des revendications précédentes, dans lequel le biopolymère particulaire non modifié en surface est de la nanocellulose non modifiée en surface telle que la nanocellulose cristalline (CNC) ou la cellulose nanofibrillaire (NFC), plus préférablement la nanocellulose modifiée non superficielle jamais séchée.

**EP 3 394 108 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014070092 A1
- WO 2012127110 A1
- WO 2010066905 A1
- EP 13735325 A